Europäisches Patentamt

European Patent Office

Office européen des brevets

(11) Publication number: **0 317 068**

**A2**

# (12) EUROPEAN PATENT APPLICATION

(21) Application number: 88309315.5

(51) Int. Cl.4: **G06F 1/04**

(22) Date of filing: **06.10.88**

The title of the invention has been amended (Guidelines for Examination in the EPO, A-III, 7.3).

(30) Priority: **09.10.87 GB 8723735**

(43) Date of publication of application:
**24.05.89 Bulletin 89/21**

(84) Designated Contracting States:
**DE FR GB**

(71) Applicant: **THE DE LA RUE COMPANY PLC**
**De La Rue House 3/5 Burlington Gardens**
**GB-London W1A 1DL(GB)**

(72) Inventor: **Newman, Roger Keith**
**Meadow Croft Hoe Road**
**Bishops Waltham Southampton**
**Hampshire(GB)**
Inventor: **Bywater, Robert Eric Hayward**
**51 Poplar Road**
**Shalford Guildford Surrey(GB)**

(74) Representative: **Skone James, Robert Edmund et al**
**GILL JENNINGS & EVERY 53-64 Chancery Lane**
**London WC2A 1HN(GB)**

(54) Processing system with automatic clock switching.

(57) A processing system includes a frequency generator, an integrated circuit card (1) and a card terminal (2). The card (1) and the terminal (2) each have a processor (17, 18) and the terminal (2) may be coupled to the card (1) in order to enable a processing function to be performed by the processors (17, 18). The processors (17, 18) can operate at at least a first clock frequency and a second clock frequency. The frequency generator comprises switch means (6 ; 11) to select either the first or the second clock frequency depending on the processing function to be performed. Preferably the first and the second clock frequencies are supplied by a single frequency source (9) and a zero frequency source (10) is also provided. Typically, the frequency generator is housed in the card terminal (2).

*Fig.1.*

## PROCESSING SYSTEM

The invention relates to processing systems, and in particular, processing systems comprising an integrated circuit card and a card terminal, each having a processor.

In order to comply with draft ISO standards for frequency of dialogue between an integrated circuit card having a processor and a card terminal also having a processor, it is required that the card responds to a reference clock frequency between 1 MHz and 4 MHz for the initial dialogue.

Unfortunately this clock frequency leads to relatively slow communication between the card and terminal.

In accordance with a first aspect of the present invention a processing system includes a frequency generator, an integrated circuit card and a card terminal, each of the card and the terminal having a processor and wherein the terminal may be coupled to the card in order to enable a processing function to be performed by the processors and wherein the processors can operate at at least a first clock frequency and a second clock frequency, and whereby the frequency generator comprises automatic switch means to select either the first or the second clock frequency in accordance with the processing function to be performed.

In accordance with a second aspect of the present invention, an integrated circuit card capable of being coupled to a card terminal in order to enable a processing function to be performed comprises a processor which operates at at least a first clock frequency and a second clock frequency in accordance with the processing function to be performed.

In accordance with a third aspect of the present invention, a card terminal to which an integrated circuit card can be coupled in order to enable a processing function to be performed, the terminal comprising a processor which can operate at at least a first clock frequency and a second clock frequency in accordance with the processing function to be performed.

This invention provides a system to enable a card terminal and an integrated circuit card, each having a processor, to operate at at least two different transmission rates. For the initial dialogue sequence between the card and the terminal the data transmission rate can be at the first, usually low frequency in order to comply with the ISO standards, and subsequent to this initial dialogue being completed the data transmission rate can be increased to a second higher clock frequency in order to enhance the overall processing system performance.

The invention utilises the fact that the processors are capable of operating at higher reference clock frequencies then required by the ISO standard with a consequential improvement in operational performance, i.e. instruction time execution, which in turn can have a beneficial effect on the overall card system performance. Thus the data transmission rate (baud rate) between an integrated circuit card and a card terminal may be set to 9600 baud for the initial dialogue, but to a higher speed subsequent to the initial dialogue.

In one embodiment the first clock frequency and the second clock frequency are supplied by two separate frequency sources. Preferably, the processor in the card terminal controls an electronic switch to determine which frequency source is selected for use as the clock frequency, although the processor in the card may be used to control the switch.

However, in the preferred embodiment there is a single frequency source which may be controlled to generate two different frequency signals. Preferably the processor in the card terminal selects which of the two frequency signals it wishes to use although in certain cases the processor in the card may select the frequency signal.

Typically, the frequency generator would be housed within the card terminal. However it may be housed in the card or may be separate from both the card terminal and the card.

Preferably, when the frequency generator comprises a single frequency source, the frequency source signal is an even multiple of both the first and the second clock frequencies. However, it is possible that the frequency source signal could be an odd multiple or even a non-integer multiple of either the first or the second frequency, or both frequencies.

Preferably, the frequency generator also comprises a zero frequency source in order to halt a processing function and this would typically be provided by an earth potential.

Preferably one of the clock frequencies is in the range 1MHz and 4MHz, and the other clock frequency is greater than 4MHz.

Typically, the switch means is an electronic switch operated preferably by the card terminal processor, although the switch means could be operated by the card processor possibly in response to software control from the card terminal.

The term "Processing Function" as used herein may mean data transmission between the integrated circuit card and the card terminal in either direction, or an operation performed by either the integrated circuit card or the card terminal, or both.

In order that the invention may be better understood two embodiments of an integrated circuit card and a card terminal according to the invention will now be described with reference to the accompanying drawings, in which;-

Figure 1 is a schematic circuit diagram of one example of an integrated circuit card and a card terminal which may operate on two different clock frequencies;

Figure 2 is a schematic diagram of a second example showing an integrated circuit card and a card terminal and how a single frequency source may be used to obtain one of two clock frequencies.

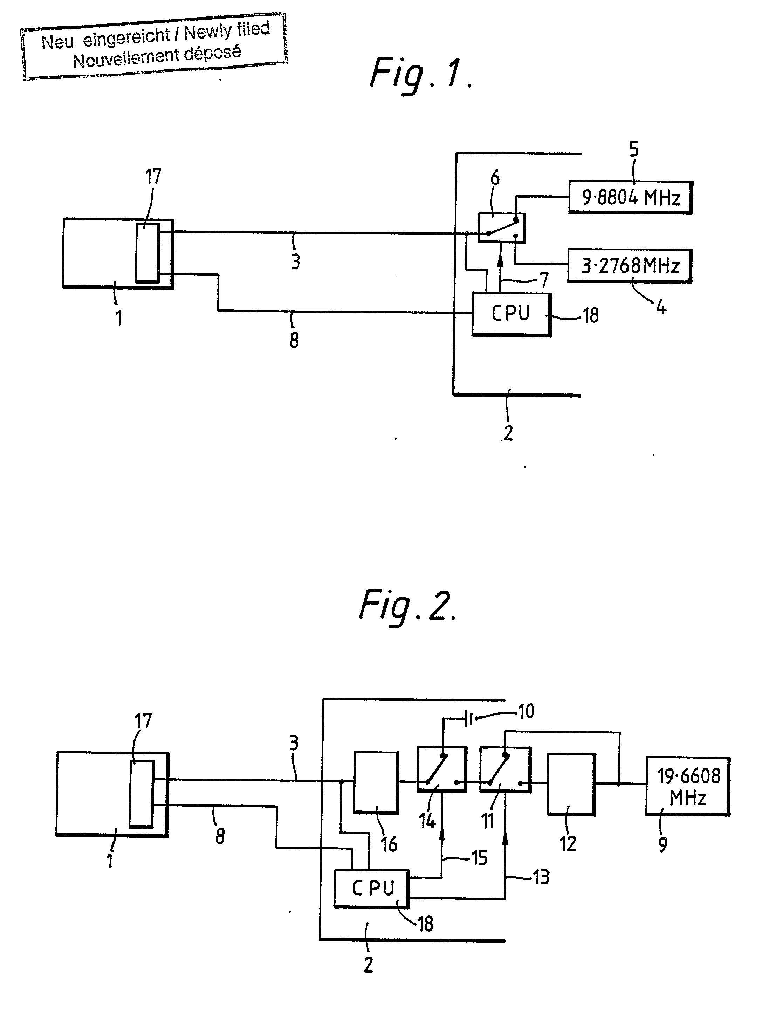

Figure 1 shows an integrated circuit card 1 for use for example as a credit or charge card which contains a single chip microcontroller 17, which comprises a central processing unit (CPU), a read-only memory, a randam access memory and a storage memory which could be either an electrically erasable programmable read-only memory or merely an erasable programmable read-only memory. The single chip microcontroller 17 is connected to a card terminal 2 by a clock frequency link 3 provided for example by a conventional card reading unit. The card terminal 2 contains a central processing unit (CPU) 18, two clock frequency sources 4, 5 and an electronic switch 6 to enable the clock frequency link 3 to be switched to either a 3.2768 MHz frequency source 4 or a 9.8804 MHz frequency source 5.

The clock frequency sources 4, 5 are transistor-transistor logic (TTL) crystal controlled integrated square wave generators.

The switch 6 is controlled by a control line 7 connected to the card terminal CPU 18. When the voltage applied to the control line 7 is high the switch 6 will connect the clock frequency line 3 to the 9.8804 MHz source 5. When the voltage applied to the control line 7 is low the switch 6 will connect the clock frequency line 3 to the 3.2768 MHz frequency source 4.

Hence, the CPU 18 of the card terminal 2 is able to select the rate of data transfer along line 8 between the integrated circuit card 1 and the card terminal 2 by applying the appropriate voltage to control line 7 in order to select the correct clock frequency to be applied to the line 3.

Figure 2 shows an alternative embodiment of the invention, in which a single clock frequency source 9, having a frequency output of 19.6680 MHz, is used to supply either a 3.2768 MHz clock frequency or a 9.8804 MHz clock frequency to the control frequency line 3. In addition, the control frequency line 3 may be connected to an earth terminal 10 to supply a zero frequency or DC signal to the clock line 3 in order to halt data flow on the line 8.

In this embodiment, the 19.6608 MHz frequency is supplied directly from the frequency generator 9 to an input of a switch 11, and to a divide by three circuit 12. The output of the circuit 12 is 6.5536 MHz which is then supplied to the other input of the switch 11. When the control line 13 of the switch 11 has a low voltage applied to it the switch 11 selects and outputs the 6.5536 MHz frequency signal, and when the control line 13 of the switch 11 has a high voltage applied to it, the switch 11 selects and outputs the 19.6608 MHz frequency signal.

The output from the switch 11 is supplied to one input terminal of the switch 14, the other input terminal of the switch 14 being connected to an earth potential 10. The switch 14 is controlled by a control line 15. When a low voltage is applied to the control line 15, the switch 14 selects the output frequency signal from the switch 11, i.e. the 19.6608 MHz signal or the 6.5536 MHz signal. When a high voltage is applied to the control line 15, the switch 14 selects the zero frequency signal from the earth potential 10.

The output from the switch 14 is then fed to a divide by two circuit 16. If the control signal applied to line 15 is high then the output from the switch 14 is the zero frequency signal and therefore the output from the divide by two circuit 16 must necessarily also be the zero frequency signal. This results in a zero clock frequency on the control line 3 which prevents any data or information flow on the line 8 between the integrated circuit card 1 and the card terminal 2. If the voltage applied to the control line 15 is low and the voltage applied to the control line 13 is high, then the output from switch 11 is the 19.6608 MHz frequency signal and therefore the output from switch 14 is also the 19.6608 MHz signal. Hence, the output from the divide by two circuit 16 is a 9.8304 MHz signal which is applied to the control line 3. This enables the data flow between the integrated circuit card 1 and the card terminal 2 on the data line 8 to occur at a rate of 9.8304 MHz. If the voltage applied to the control line 15 is low and the voltage applied to control line 13 is also low, then the output of the switch 11 is the 6.5536 MHz signal and therefore the frequency output from switch 14 is also 6.5536 MHz. Hence, the output from the divide by two circuit 16 is a 3.2768 MHz signal. This reduces the rate of data flow on the line 8 between the integrated circuit card 1 and the card terminal 2 to a frequency of 3.2768 MHz.

The frequency generator 9 is a TTL crystal controlled integrated square wave generator with an output signal of 19.6608 MHz. A suitable integrated circuit for the divide by three circuit 12 is a 74LS109 integrated circuit, and a suitable device for the divide by two circuit 16 is a data-latch (D type) flip-flop wired as a divide by two in order to give the necessary frequency reduction. A suitable combination of NOR logic gates and D type flip-flops can be used for the switches 1, 14.

The control signals applied to control lines 15 and 13 are provided by the CPU 18 in the card terminal 2, although they may be provided by the CPU in the single chip microcontroller 17 in the integrated circuit card 1.

By using the circuit illustrated in Figure 2 the basic frequency source 9 (19.6608 MHz) is always an even multiple of the clock frequency signal on the control frequency line 3. This results in a 50/50 duty cycle always being output by the divide by two circuit 16 (except when there is a zero frequency signal from the switch 14) onto the control line 3.

This ability to select either a high transmission date rate or a low transmission rate enables the initial dialogue between the integrated circuit card 1 and the card terminal 2 to take place at a low frequency (3.2768 MHz), in order to satisfy the draft ISO standards. After the initial dialogue between the card 1 and the card terminal 2 has been completed the CPU 18 in the card terminal 2 or in certain cases the single chip microcontroller 17 in the card 1, can select the higher frequency (9.8804 MHz) in order to increase the rate of information transmission between the card 1 and the card terminal 2, with a consequential improvement in operational performance.

In operation, a card 1 is inserted into the terminal 2. Power is then supplied to the single chip microcontroller 17 in the card 1 from the terminal 2 and the CPU 18 in the terminal automatically selects the 3.2768 MHz clock signal. The CPU 18 then sends a reset command to the single chip microcontroller 17, together with the 3.2768 MHz signal. This reset command returns the instruction sequence in the single chip microcontroller 17 to the start and the single chip microcontroller 17 then sends an initialisation answer to the CPU 18 on the line 8 clocked by the 3.2768 MHz signal. This initialisation answer informs the CPU 18 of the status of the card 1 and the CPU 18 can then decide whether the card 1 is of the correct format and whether it can communicate with the card. If the CPU 18 decides that it can communicate, it automatically selects the 9.8804 MHz signal and all further communications between the card 1 and the terminal 2 occur at this higher data transmission rate.

## Claims

1. A processing system including a frequency generator, an integrated circuit card (1) and a card terminal (2), each of the card (1) and the terminal (2) having a processor (17,18) and wherein the terminal (2) may be coupled to the card (1) in order to enable a processing function to be performed by the processors (17,18) and wherein the processors (17,18) can operate at at least a first clock frequency and a second clock frequency, and whereby the frequency generator comprises automatic switch means (6;11) to select either the first or the second clock frequency in accordance with the processing function to be performed.

2. A processing system according to claim 1, wherein the first clock frequency is between 1 MHz and 4 MHz.

3. A processing system according to claim 1 or claim 2, wherein the second clock frequency is greater than 4 MHz.

4. A processing system according to any of the preceding claims, wherein the frequency generator further comprises a zero frequency source (10).

5. A processing system according to claim 4, wherein the zero frequency source (10) is provided by an earth potential.

6. A processing system according to any of the preceding claims, wherein the first clock frequency and the second clock frequency are supplied by two separate frequency sources (4, 5).

7. A processing system according to any of claims 1 to 5, wherein the first clock frequency and the second clock frequency are generated from a single frequency source (9).

8. A processing system according to claim 7, wherein the frequency of the signal from the single frequency source is an even multiple of both the first and the second clock frequencies.

9. A processing system according to any of the preceding claims, wherein the switch means (6 ; 11) is an electronic switch.

10. A processing system according to any of the preceding claims, wherein the switch means (6 ; 11) is controlled by the card terminal processor (18).

11. A processing system according to any of the preceding claims, wherein the frequency generator is within the card terminal (2).

12. An integrated circuit card (1) capable of being coupled to a card terminal (2) in order to enable a processing function to be performed, the card comprising a processor (17) which operates at at least a first clock frequency and a second closk frequency in accordance with the processing function to be performed.

13. A card according to claim 12, wherein the first clock frequency is between 1 MHz and 4 MHz.

14. A card according to claim 12 or claim 13, wherein the second clock frequency is greater than 4 MHz.

15. A card terminal (2) to which an integrated circuit card (1) can be coupled in order to enable a processing function to be performed, the terminal comprising a processor (18) which can operate at at least a first clock frequency and a second clock frequency in accordance with the processing function to be performed.

16. A card according to claim 15, wherein the first clock frequency is between 1 MHz and 4 MHz.

17. A card terminal according to claim 15 or claim 16, wherein the second clock frequency is greater than 4 MHz.

*Fig. 1.*

*Fig. 2.*